# EUROPÄISCHE PATENTSCHRIFT

(11) **EP 0 795 708 B1**
(45) Veröffentlichungstag und Bekanntmachung des Hinweises auf die Patenterteilung: **18.04.2001**
(21) Anmeldenummer: 96112410.4
(22) Anmeldetag: 01.08.1996
(51) Int. Cl.: F16L 3/22, F16L 3/13

(54) **Klemmschelle**
Pipe clamp
Collier de serrage

(30) Priorität: 11.03.1996 DE 19609440
(43) Veröffentlichungstag der Anmeldung: 17.09.1997
(73) Patentinhaber: OBO Bettermann GmbH & Co. KG., 58710 Menden (DE)
(72) Erfinder: Broszukat, Peter, Dipl.-Ing., 58708 Menden (DE); Nickel, Wilfried, 58710 Menden (DE)
(74) Vertreter: Köchling, Conrad, Dipl.-Ing.

(56) Entgegenhaltungen:
- EP-A- 0 555 550
- DE-A- 4 435 177
- US-A- 4 306 697

## Beschreibung

Die Erfindung betrifft eine Klemmschelle siehe z.B. die US-A-4 306 697 und die EP-A-555550, insbesondere aus Kunststoff, mit einem Sockelteil zur ortsfesten Anordnung der Klemmschelle und einem gabelähnlichen Klemmteil mit Klemmarmen oder dergleichen Klemmelementen zum Einklemmen eines Rohres oder eines ähnlichen zylindrischen Langformteiles, wobei am Sockelteil an den parallel zur Rohrdurchführung des Klemmteils gerichteten Seitenflächen Anreihmittel zum Anreihen von Klemmschellen mit gleichartig ausgebildeten Anreihmitteln ausgebildet sind, wobei Anreihmittel aus parallel zur Rohrdurchführung des Klemmteiles verlaufenden, von einer Seitenfläche des Sockelteils abragenden Stegen mit verdickten Enden und aus in der anderen Seitenfläche des Sockelteils ausgebildeten Nuten mit entsprechend der Stegverdickung erweitertem Nutgrund bestehen.

Bei einer derartigen Klemmschelle ist das Sockelteil etwa quaderförmig ausgebildet. Die längeren Seitenflächen des Sockelteils sind quer zur Verlaufsrichtung eines eingespannten Rohres oder dergleichen gerichtet, während die schmalen Sockelseiten parallel dazu gerichtet sind. Die schmalen Sockelseiten weisen die Anreihmittel auf, wobei in der einen Schmalseite eine Nut und an der anderen Schmalseite ein Vorsprung ausgebildet ist. Die Nut ist an ihren Enden, die aus den breiten Sockelflächen austreten offen. Der Steg verläuft über die gesamte Breite des schmalen Sockelteils. Die Nut ist dabei im Nutgrund mit einer Erweiterung versehen, während der Steg an seinem freien Ende eine Verdickung aufweist. Die Ausbildung gestattet es, mehrere gleichartige Klemmschellen nebeneinander anzuordnen und miteinander zu verbinden, indem eine Parallelverschiebung der benachbarten Klemmschellen in der Weise erfolgt, daß die Nut einer anzureihenden Klemmschelle auf einen Steg einer schon verlegten Klemmschelle parallel zur Verlaufsrichtung eines eingespannten Rohres aufgeschoben wird. Zusätzlich können noch an den langen Seitenflächen des Sockelteiles nut- und stegartige Führungselemente ausgebildet sein, die ein Aufschieben (Queraufschieben) auf eine Installationsschiene oder dergleichen ermöglichen. Bei derartigen bekannten Klemmschellen ist es lediglich möglich, diese Klemmschellen durch Parallelverschiebung zueinander miteinander zum Zwecke der Anreihung zu verbinden. Manchmal ist es aber wegen eines geringen Einbauraumes erforderlich, eine solche Schelle quer zu einer schon bestehenden Schelle anzuordnen und einzubringen, wobei dann die Ankopplung durch Parallelverschiebung der Teile zueinander nicht möglich ist. Dies ist insbesondere dann von Nachteil, wenn solche Klemmschellen in Schienen eingeschoben sind, die quer zur Verlaufrichtung der einzuklemmenden Rohre gerichtet sind. Weiterhin ist nachteilig, daß bei der angegebenen Ausführungsform lediglich die Verbindung mittels eines Klemmsteges erforderlich ist, der in die entsprechende Nut eingeschoben wir. Aus Sicherheitsgründen wäre es nützlich, wenn eine Mehrfachverbindung in der Anreihposition vorliegen würde.

Ausgehend von diesem Stand der Technik liegt der Erfindung die Aufgabe zugrunde, eine Klemmschelle gattunsgemäßer Art zu schaffen, bei der eine sichere Verbindung zweier benachbarter Klemmschellen in der Anreihposition gebildet ist und bei der ein Anreihen sowohl in der Weise möglich ist, daß die Klemmschellen parallel zueinander verschoben und die Anreihmittel miteinander in Eingriff gebracht werden als auch die Klemmschellen quer zueinander verschoben werden können und die Anreihmittel dabei miteinander in Eingriff gebracht werden können.

Zur Lösung dieser Aufgabe schlägt die Erfindung vor, daß an der mit Stegen versehenen Seitenfläche des Sockelteils mehrere Stege mit Abstand übereinander, parallel zueinander verlaufend ausgebildet sind, wobei der Stegquerschnitt unterschiedlich und der Querschnitt der Verdickungen analog den Stegquerschnitten unterschiedlich ausgebildet ist, und daß an der mit Nuten versehenen Seitenfläche des Sockelteils entsprechend unterschiedlich geformte Nuten ausgebildet sind, wobei in der Anreihposition benachbarter Klemmschellen sämtliche Verdickungen der Stege in sämtlichen Erweiterungen der Nutgründe passend eingreifen, mindestens aber die zum Trennen der angereihten Klemmschellen auf Zug belasteten Flächen von Verdickungen und Erweiterungen aneinander anliegen.

Durch die Mehrfachanordnung von Stegen mit Verdickungen und Nuten mit Erweiterungen ist eine hohe Lagesicherheit in der Anreihposition gewährleistet, da nicht nur ein einziges Anreihmittel sondern mehrere Anreihmittel gleichzeitig zur Fixierung in der Sollposition zur Verfügung stehen. Durch die unterschiedliche Abmessung der Stegquerschnitte, der Verdickungen und der entsprechenden Nuten wird die manuelle Verbindung der Klemmschellen miteinander erleichtert, wenn diese Klemmschellen einander quer zugeführt werden, so daß die mit Nuten und Stegen versehenen Seitenflächen des Sockels orthogonal einander zugeführt werden, beispielsweise dann, wenn solche Klemmschellen in Installationsschienen geführt sind, die quer zur Verlaufsrichtung der einzuklemmenden Rohre angeordnet sind. Es wird nämlich durch die unterschiedliche Stegabmessung und Verdickungsabmessung sowie die unterschiedliche Nutabmessung erreicht, daß die einzelnen Anreihmittel mit unterschiedlichem Kraftaufwand ineinander gedrängt werden können, so daß beim Andrücken einer solchen Klemmschelle an eine schon installierte Klemmschelle trotz der Mehrfachanordnung der Anreihmittel nur ein mäßiger Kraftaufwand erforderlich ist. Insbesondere durch die im Querschnitt unterschiedlich bemessenen Verdickungen ist es leichter möglich, die im Querschnitt gering bemessenen Verdickungen beim Einschieben in die entsprechenden Nuten elastisch zu verformen bzw. auch die Nut elastisch zu verformen, als bei den im Querschnitt dicker bemessenen Verdickungen der Fall ist, so daß trotz der Mehrfachanordnung der Anreihmittel eine relativ geringe Kraft zu manuellem Verbinden der Anreihmittel erforderlich ist.

Zudem ist das Anreihen der Klemmschellen sowohl durch Einfädeln und Verschieben der benachbarten Klemmschellen in Richtung parallel zum Verlauf eines eingeklemmten Rohres oder dergleichen zylindrischen Langformteil als auch durch Querverschiebung von zwei parallel zueinander ausgerichteten Klemmschellen zueinander hin erfolgt.

Um das manuelle Eindrücken beim Queranreihen zu erleichtern ist zudem vorgesehen, daß die Nutmündungen sich erweiternd geformt sind.

Aus dem gleichen Grunde ist bevorzugt vorgesehen, daß die Verdickungen sich zum freien Ende hin verjüngend geformt sind.

Eine besonders bevorzugte und geeignete Weiterbildung wird darin gesehen, daß an beiden Seitenflächen des Sockels jeweils Stege mit Verdickungen und Nuten mit Erweiterungen jeweils abwechselnd übereinander ausgebildet sind.

Hierdurch wird eine besonders haltbare Fixierung der Teile aneinander bewirkt und zudem bei geringem Platzbedarf am Sockelteil die Anordnung von mehreren Anreihmitteln ermöglicht.

Weiterhin ist bevorzugt vorgesehen, daß die Anordnung und Ausbildung der Nuten mit Erweiterungen und Stege mit Verdickungen so vorgenommen ist, daß deren Querschnittsabmessung von der Basisfläche des Sockelteils zu der das Klemmteil tragenden Sockelfläche hin abnimmt.

Bei dieser Ausbildung ist beispielsweise der Steg mit Verdickungen, der in unmittelbarer Nähe der Basis des Sockelteils angeordnet ist, derjenige mit der größten Querschnittsabmessung und ebenso die dazugehörige Nut, während mit zunehmendem Abstand von der Basisfläche des Sockelteils in Richtung auf die Klemmarme des Sockelteils Stege mit geringerem Querschnitt, Verdickungen mit geringerem Querschnitt und entsprechend auch Nuten und Erweiterung mit geringerem Querschnitt ausgebildet sind. Dies ist insbesondere bei der Montage solcher Klemmschellen an quer zur Rohrverlaufrichtung oder dergleichen gerichteten Schlitzschienen vorteilhaft, weil die Klemmschellen in der Nähe des Sockelteiles durch die entsprechenden Schienen geführt sind, so daß beim Querverbinden und Zusammenstecken der Klemmschellen in diesem Bereich ein höherer Kraftaufwand aufbringbar ist, ohne daß die Neigung besteht, daß die Klemmschellen sich gegeneinander verschieben, während mit Abstand von der Basisfläche und gleichzeitigem entsprechend größerem Abstand von der Eingriffsstelle der Schiene der Kraftaufwand zum Verbinden der Anreihmittel geringer wird.

Eine unter Umständen bevorzugte Ausbildung wird darin gesehen, daß die Stege mit Verdickungen und die Nuten mit Erweiterungen im Querschnitt pilzkopfartig ausgebildet sind.

Hierdurch wird das Zusammenstecken der Klemmschellen weiterhin gefördert, wobei ein unbeabsichtiges Ausrasten der in Eingriff befindlichen Stegverdickungen und Nuterweiterungen wegen der pilzkopfartigen Ausbildung von Verdickungen und Nuterweiterungen auszuschließen ist, da durch die vorzugsweise rechtwinklig zur Zuführrichtung der Klemmschellen Anreihmittel ausgerichteten Hinterschnittflächen der pilzkopfartigen Ausbildung eine nahezu unlösbare Rastverbindung gebildet ist.

Alternativ kann auch bevorzugt sein, daß die Verdickungen der Stege und die Erweiterungen der Nuten im Querschnitt kreisbogenartig geformt sind.

Um auf geringem Raum (bei geringer Höhe des Sockelteils) möglichst viele Anreihmittel unterbringen zu können, ist zudem vorgesehen, daß die Stege mit Verdickungen so angeordnet sind, daß zwischen benachbarten Stegen mit Verdickungen durch die einander zugewandten Stegflanken und Verdickungsflanken entsprechende Nuten mit Erweiterungen geformt sind.

Um die Montage beim Zusammenführen der durch Querbewegung zueinander zu verbindenden Anreihmittel noch zu erleichtern ist zudem vorgesehen, daß die einander benachbarten Stege mit Verdickungen und Nuten mit Erweiterungen so ausgebildet sind, daß beim Querzuführen einer weiteren Klemmschelle zunächst die im Querschnitt am größten bemessenen Verdickungen in die am größten bemessenen Nuten mit Erweiterungen teilweise eindrückbar sind bevor die im Querschnitt nächst kleinere Verdickung in die zugehörige Nut eingreift.

Beispielsweise können die im Querschnitt größeren Verdickungen weiter über die Seitenflucht des Sockelteils vorragen als die im Querschnitt geringer bemessenen Verdickungen, so daß beim Zusammenführen benachbarter Klemmschellen zunächst die im Querschnitt größer bemessenen Verdickungen in die entsprechenden Nuten teilweise eingreifen, bevor die nächst größere Verdickung eines benachbarten Steges in die entsprechend bemessene weitere Nut eingreift und infolge dann das oder die weiteren im Querschnitt geringer bemessenen Verdickungen an den Stegenden in die entsprechenden Nuten nachfolgend eingreifen. Auf diese Weise wird bei der Montage eine gewisse Kraftverteilung erreicht, was für den Montagevorgang vorteilhaft ist.

Ausführungsbeispiele der Erfindung sind in der Zeichnung gezeigt und im folgenden näher beschrieben.
Es zeigt:
- Fig. 1: eine erste Ausführungsform von Klemmschellen in Ansicht;
- Fig. 2: eine Variante in gleicher Ansicht;
- Fig. 3 bis 8: Detaildarstellungen der Variante gemäß Figur 2 in unterschiedlicher Montageposition.

In den Zeichnungen sind Klemmschellen 1 aus Kunststoff gezeigt, die ein Sockelteil 2 zur ortsfesten Anordnung der Klemmschelle 1 und ein gabelähnliches Klemmteil mit Klemmarmen 3 zum Einklemmen eines Rohres oder dergleichen aufweisen. Das Sockelteil 2 ist im wesentlichen quaderförmig ausgebildet, wobei die längere Seitenfläche des Quaders in der Zeichnung vorn und hinten liegt, während die schmalen Seitenflächen des Quaders orthogonal dazu gerichtet sind. In den langen Seitenflächen des Sockelteils 2 sind Nuten 4 ausgebildet. Die Klemmschelle 1 ist mit diesen Nuten 4 auf Schienen, beispielsweise Kunststoffschienen, quer aufschiebbar, die C-förmig profiliert sind und die mit ihren abgewinkelten zueinander weisenden Enden in die entsprechenden Nuten 4 einer Klemmschelle 1 eingreifen.

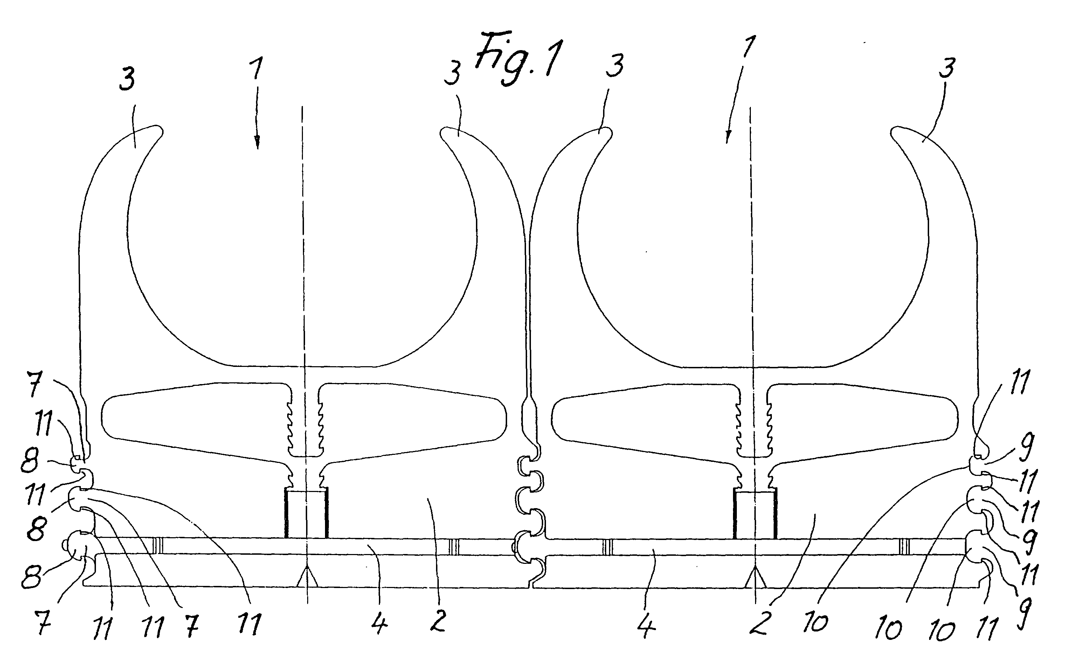

Am Sockelteil 4 sind an den parallel zur Rohrdurchführung (parallel zur Lotrechten auf die Zeichnungsebene gemäß Figur 1 beispielsweise) gerichteten Seitenflächen Anreihmittel 5, 6 zum Anreihen von Klemmschellen 1 mit gleichartig ausgebildeten Anreihmitteln angeordnet. Die Anreihmittel 5, 6 bestehen aus parallel zur Rohrdurchführung des Klemmteils verlaufenden, von einer Seitenfläche des Sockelteils 2 abragenden Stegen 7 mit verdickten Enden 8 und auf der anderen Seitenfläche des Sockelteils ausgebildeten Nuten 9 mit entsprechend der Stegverdickung erweitertem Nutgrund 10. Im Ausführungsbeispiel sind an beiden Seitenflächen des Sockelteils 2 in Abfolge Nuten 9 und Stege 7 mit Verdickungen 8 bzw. Erweiterungen 10 vorgesehen. An der mit Stegen 7 versehenen Seitenfläche des Sockelteils 2 sind mehrere Stege 7 mit Abstand übereinander, parallel zueinander verlaufend ausgebildet, wobei der Stegquerschnitt unterschiedlich und der Querschnitt der Verdickungen 8 an den Stegenden analog den Stegquerschnitten unterschiedlich ausgebildet ist. An der mit den Nuten 9 versehenen Seitenfläche des Sockelteils 2 sind entsprechend unterschiedlich geformte Nuten ausgebildet, deren Nutweite entsprechend der Stegabmessung abnimmt und deren Erweiterung 10 ebenfalls entsprechend der Verdickungsabmessung abnimmt.

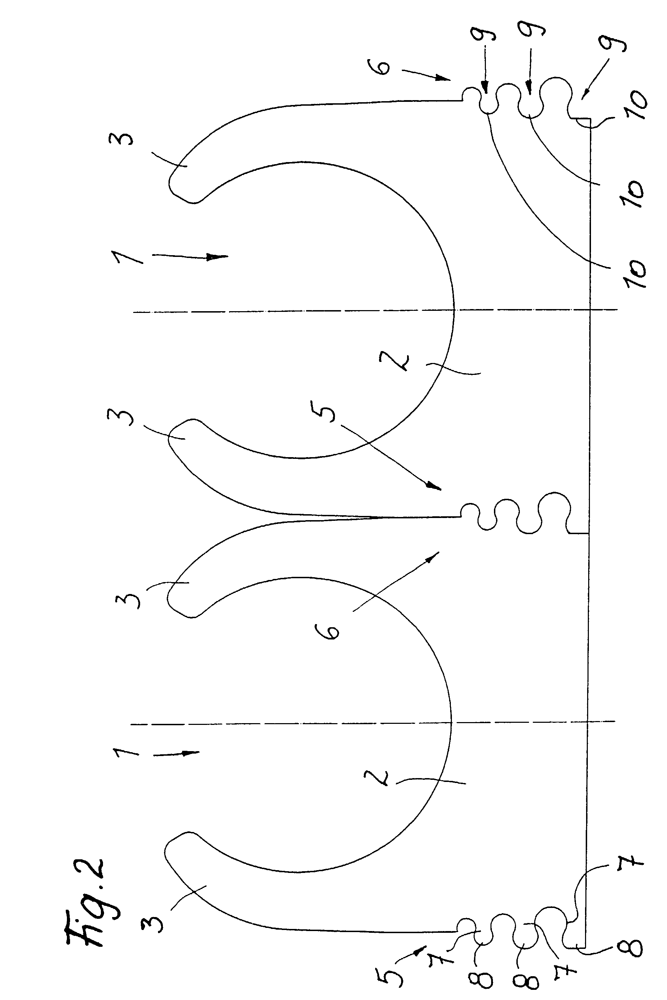

In der Anreihposition, die beispielsweise in Figur 1 und 2 gezeigt ist, sind sämtliche Verdickungen 8 der Stege 7 in sämtlichen Erweiterungen 10 der Nutgründe der Nuten 9 passend eingefügt. Insbesondere bei der Ausführungsform gemäß Figur 1 sind die zum Trennen der angereihten Klemmschellen 1 auf Zug belasteten Flächen 11 der Verdickungen 8 und der Erweiterungen 10 in der Anreihposition aneinander anliegend, während zwischen dem freien Ende der Verdickung und dem Nutgrund in der Erweiterung 10 ein gewisses Spiel vorhanden ist.

Das Anreihen solcher Klemmschellen 1 kann sowohl durch Einfädeln und Verschieben der benachbarten Klemmschellen 1 in Richtung parallel zum Verlauf eines eingeklemmten Rohres oder dergleichen erfolgen als auch durch Querverschiebung von zwei parallel zueinander ausgerichteten Klemmschellen zueinander hin. Vorzugsweise sind die Mündungen der Nuten 9 sich erweiternd geformt ebenso wie die Verdickungen 8 sich zu ihrem freien Ende hin verjüngend geformt sind, um auf diese Weise eine Einführhilfe beim Verbinden der Anreihmittel zu erreichen.

Bei den dargestellten Ausführungsformen sind an beiden Seitenflächen des Sockels 2 jeweils Stege 7 mit Verdickungen 8 und Nuten 9 mit Erweiterungen 10 abwechseln übereinander ausgebildet. Die Anordnung und Ausbildung der Nuten 9 mit Erweiterungen 10 und Stege 7 mit Verdickungen 8 ist so vorgenommen, daß deren Querschnittsabmessung von der Basisfläche (in Zeichnungsfigur 1 und 2 unten) des Sockelteils 2 zu der das Klemmteil tragenden Sockelfläche hin abnimmt.

Die Stege 7 mit Verdickungen 8 und die Nuten 9 mit Erweiterungen 10 sind bei der Ausführungsformg gemäß Figur 1 pilzkopfartig ausgebildet. Bei der Ausführungsform gemäß Figur 2 bis 8 sind die Verdickungen 8 der Stege 7 und die Erweiterungen 10 der Nuten 9 im Querschnitt kreisbogenartig geformt. Um eine räumlich äußerst enge Anordnung von möglichst vielen Stegen und Nuten zu ermöglichen und somit die zur Verfügung stehende Fläche des Sockelteil 2 möglichst vollständig zu nutzen, ist zudem vorgesehen, daß die Stege 7 mit Verdickungen 8 so angeordnet sind, daß zwischen benachbarten Stegen 7 mit Verdickungen 8 durch die einander zugewandten Stegflanken und Verdickungsflanken entsprechende Nuten 9 mit Erweiterungen 10 geformt sind.

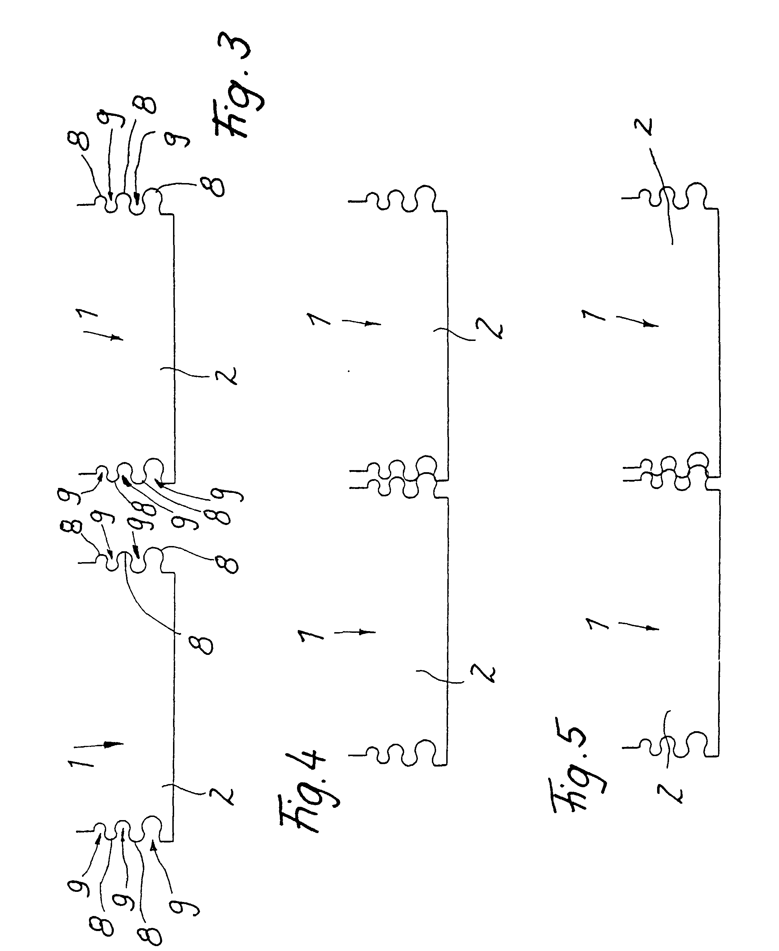

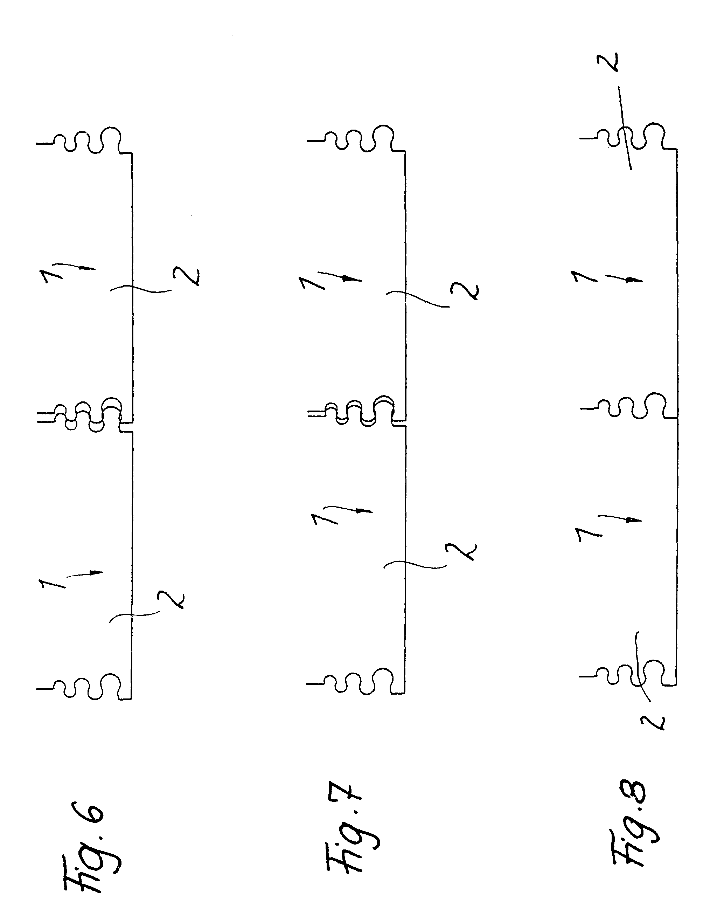

Bei der Ausführungsform gemäß Figur 2 bis 8 sind die einander benachbarten Stege 7 mit Verdickungen 8 und Nuten 9 mit Erweiterungen 10 so ausgebildet, daß beim Querzuführen einer weiteren Klemmschelle 1 zu einer vorhandenen Klemmschelle 1 zunächst die im Querschnitt am größten bemessenen Verdickungen 8 in die am größten bemessenen Nuten 9 mit Erweiterungen 10 teilweise eindrückbar sind, bevor die im Querschnitt nächst kleinere Verdickung 8 in die zugehörige Nut 9 eingreift. Der entsprechende Bewegungsablauf bei dem Querzuführen von zwei Klemmschellen ist anhand der Figuren 3 bis 8 erläutert. In Figur 3 ist zunächst beispielsweise die links dargestellt Klemmschelle 1 schon fest installiert, während die rechts dargestellte Klemmschelle 1 dieser quer zugeführt wird. Gemäß Figur 4 erfolgt bei einer Annäherung der beiden Klemmschellen 7 zueinander zunächst ein Eingriff der im Querschnitt am größten bemessenen Verdickung 8 (jeweils an der Klemmschelle unten) in die im Querschnitt am größten bemessene Nut 9 mit entsprechender Verdickung 10. Dies ist aus Figur 4 ersichtlich. Bei weiterem Annähern der Klemmschellen 1 erfolgt dann ein Eingriff der nächst größeren Verdickung 8 in die entsprechende Nut 9, so daß gemäß Figur 5 zunächst die unteren beiden Anreihmittel miteinander in Kontakt sind. Gemäß Figur 6 erfolgt bei weiterer Annäherung der Klemmschellen 1 aneinander dann auch ein Eingriff der nächstfolgenden geringer bemessenen Verdickung 8 in die entsprechende Nut 9, bis gemäß Figur 7 alle Verdickungen 8 in die entsprechenden Nuten 9 eingreifen. In der Sollposition, die in Figur 8 gezeigt ist, sitzen dann die Verdickungen 8 in den entsprechenden Erweiterungen 10 der Nuten 11 passend ein.

Auf diese Weise wird eine Kraftverteilung beim Zuführen der Klemmschellen 1 erreicht, so daß der Montagevorgang noch zunehmend erleichtert wird.

## Patentansprüche

1. Klemmschelle, insbesondere aus Kunststoff, mit einem Sockelteil zur ortsfesten Anordnung der Klemmschelle und einem gabelähnlichen Klemmteil mit Klemmarmen oder dergleichen Klemmelementen zum Einklemmen eines Rohres oder eines ähnlichen zylindrischen Langformteiles, wobei am Sockelteil an den parallel zur Rohrdurchführung des Klemmteils gerichteten Seitenflächen Anreihmittel zum Anreihen von Klemmschellen mit gleichartig ausgebildeten Anreihmitteln ausgebildet sind, wobei die Anreihmittel aus parallel zur Rohrdurchführung des Klemmteils verlaufenden, von einer Seitenfläche des Sockelteils abragenden Stegen mit verdickten Enden und aus in der anderen Seitenfläche des Sockelteils ausgebildeten Nuten mit entsprechend der Stegverdickung erweitertem Nutgrund bestehen, **dadurch gekennzeichnet, daß** an der mit Stegen (7) versehenen Seitenfläche des Sockelteils (2) mehrere Stege (7) mit Abstand übereinander, parallel zueinander verlaufend ausgebildet sind, wobei der Stegquerschnitt unterschiedlich und der Querschnitt der Verdickungen (8) analog den Stegquerschnitten unterschiedlich ausgebildet ist, und daß an der mit Nuten (9) versehenen Seitenfläche des Sockelteils (2) entsprechend unterschiedlich geformte Nuten (9) ausgebildet sind, wobei in der Anreihposition benachbarter Klemmschellen (1) sämtliche Verdickungen (8) der Stege (7) in sämtlichen Erweiterungen (10) der Nutgründe passend eingreifen, mindestens aber die zum Trennen der angereihten Klemmschellen (1) auf Zug belasteten Flächen (11) von Verdickungen (8) und Erweiterungen (10) aneinander anliegen.

2. Klemmschelle nach Anspruch 1, **dadurch gekennzeichnet, daß** die Nutmündungen sich erweiternd geformt sind.

3. Klemmschelle nach Anspruch 1 oder 2, **dadurch gekennzeichnet, daß** die Verdickungen (8) sich zum freien Ende hin verjüngend geformt sind.

4. Klemmschelle nach einem der Ansprüche 1 bis 3, **dadurch gekennzeichnet, daß** an beiden Seitenflächen des Sockels (2) jeweils Stege (7) mit Verdickungen (8) und Nuten (9) mit Erweiterungen (10) jeweils abwechselnd übereinander ausgebildet sind.

5. Klemmschelle nach einem der Ansprüche 1 bis 4, **dadurch gekennzeichnet, daß** die Anordnung und Ausbildung der Nuten (9) mit Erweiterungen (10) und Stege (7) mit Verdickungen (8) so vorgenommen ist, daß deren Querschnittsabmessung von der Basisfläche des Sockelteils (2) zu der das Klemmteil tragenden Sockelfläche hin abnimmt.

6. Klemmschelle nach einem der Ansprüche 1 bis 5, **dadurch gekennzeichnet, daß** die Stege (7) mit Verdickungen (8) und die Nuten (9) mit Erweiterungen (10) im Querschnitt pilzkopfartig ausgebildet sind.

7. Klemmschelle nach einem der Ansprüche 1 bis 5, **dadurch gekennzeichnet, daß** die Verdickungen (8) der Stege (7) und die Erweiterungen (10) der Nuten (9) im Querschnitt kreisbogenartig geformt sind.

8. Klemmschelle nach einem der Ansprüche 1 bis 7, **dadurch gekennzeichnet, daß** die Stege (7) mit Verdickungen (8) so angeordnet sind, daß zwischen benachbarten Stegen (7) mit Verdickungen (8) durch die einander zugewandten Stegflanken und Verdickungsflanken entsprechende Nuten (9) mit Erweiterungen (10) geformt sind.

9. Klemmschelle nach einem der Ansprüche 1 bis 8, **dadurch gekennzeichnet, daß** die einander benachbarten Stege (7) mit Verdickungen (8) und Nuten (9) mit Erweiterungen (10) so ausgebildet sind, daß beim Querzuführen einer weiteren Klemmschelle (1) zunächst die im Querschnitt am größten bemessenen Nuten (9) mit Erweiterungen (10) teilweise eindrückbar sind, bevor die in Querschnitt nächst kleinere Verdickung (8) in die zugehörige Nut (9) eingreift.

## Claims

1. A clamp strap, in particular made from plastic material, having a base part for the fixed arrangement of the clamp strap and a fork-like clamping part with clamping arms or similar clamping elements for clamping a pipe or a similar cylindrical oblong part, attachment means for the attachment of clamp straps having attachment means of a similar design being constructed at the base part at the side faces directed parallel to the tubular feedthrough of the clamping part, the attachment means consisting of webs, with thickened ends, which extend parallel to the tubular feedthrough of the clamping part and project from one side face of the base part, and of grooves, with groove bases widened to correspond with the thickened portion of the web, which are constructed in the other side face of the base part,
**characterised in that** on the side face of the base part (2) provided with webs (7), several webs (7) are constructed so that they are spaced one above the other and extend parallel to one another, the cross section the webs varying and the cross section of the thickened portions (8) varying similarly to the web cross sections,
**and in that** on the side face of the base part (2) provided with grooves (9), grooves (9) having different shapes are correspondingly constructed, in the attached position of adjacent clamp straps (1) all thickened portions (8) of the webs (7) engaging tightly in all widened portions (10) of the groove bases, but at least the faces (11) of thickened portions (8) and widened portions (10), which are under tension for the separation of the attached clamp straps (1), abut one another.

2. A clamp strap according to Claim 1,
**characterised in that** the groove openings are shaped so that they widen.

3. A clamp strap according to Claim 1 or 2,
c**haracterised in that** the thickened portions (8) are shaped so that they taper towards the free end.

4. A clamp strap according to one of Claims 1 to 3,
**characterised in that** at both side faces of the base (2), webs (7) having thickened portions (8) and grooves (9) having widened portions (19) respectively are constructed alternately one above the other.

5. A clamp strap according to one of Claims 1 to 4,
**characterised in that** the arrangement and construction of the grooves (9) with widened portions (10) and webs (7) with thickened portions (8) is performed so that their cross-sectional dimension decreases from the bottom face of the base part (2) to the base face bearing the clamping part.

6. A clamp strap according to one of Claims 1 to 5,
c**haracterised in that** the webs (7) having thickened portions (8) and the grooves (9) having widened portions (10) are constructed with a cross section in the manner of a mushroom head.

7. A clamp strap according to one of Claims 1 to 5,
**characterised in that** the thickened portions (8) of the webs (7) and the widened portions (10) of the grooves (9) are shaped so that they have a circular arc cross-section.

8. A clamp strap according to one of Claims 1 to 7,
**characterised in that** the webs (7) having thickened portions (8) are disposed so that, between adjacent webs (7) having thickened portions (8), corresponding grooves (9) having widened portions (10) are formed by the faces of the webs and faces of the thickened portions that face one another.

9. A clamp strap according to one of Claims 1 to 8,
**characterised in that** the mutually adjacent webs (7) having thickened portions (8) and grooves (9) having widened portions (10) are constructed so that, during the transversal supply of another clamp strap (1), first of all the grooves (9), having widened portions (10), which have the largest cross section can be partly forced in before the thickened portion (8) having the next smaller cross section engages in the associated groove (9).

## Revendications

1. Collier de serrage, en particulier en matière synthétique, avec une partie de socle pour la fixation du collier de serrage, et une partie de serrage en forme de fourche, présentant des bras de serrage ou des éléments de serrage similaires pour le serrage d'un tube ou d'une pièce en forme de cylindre allongé, des moyens d'alignement servant à aligner des étriers de serrage avec des moyens d'alignement réalisés de manière similaire étant formés sur les surfaces latérales de la partie de socle, orientées parallèlement au passage tubulaire de la partie de serrage, les moyens d'alignement étant constitués de nervures à extrémité épaissie qui s'étendent parallèlement au passage tubulaire de la partie de serrage, et qui débordent d'une surface latérale de la partie de socle, et de rainures réalisées dans l'autre surface latérale de la partie de socle et dont le fond de rainure est élargi en correspondance à l'épaississement des nervures, caractérisé en ce que plusieurs nervures (7) sont réalisées à distance l'une de l'autre sur les surfaces latérales dotées de nervures (7) de la partie de socle (2), et s'étendent parallèlement les unes aux autres, la section transversale des nervures étant différente et la section transversale des épaississements (8) étant différente et analogue à la section transversale des nervures, et en ce que des rainures (9) de forme différente et correspondante sont formées sur la surface latérale dotée de rainures (9) de la partie de socle (2) et, lorsque des étriers de serrage (1) voisins sont en position alignée, tous les épaississements (8) des nervures (7) s'ajustent dans tous les élargissements (10) des fonds de rainure, mais au moins les surfaces (11) des épaississements (8) et des élargissements (10) qui sont sollicitées en traction pour séparer les étriers de serrage (1) alignés sont juxtaposées.

2. Collier de serrage selon la revendication 1, caractérisé en ce que les embouchures des rainures présentent une configuration évasée.

3. Collier de serrage selon la revendication 1 ou 2, caractérisé en ce que les épaississements (8) présentent une configuration qui se rétrécit vers leur extrémité libre.

4. Collier de serrage selon l'une des revendications 1 à 3, caractérisé en ce que des nervures (7) avec épaississements (8), et des rainures (9) avec élargissement (10) sont chaque fois formées sur les deux surfaces latérales du socle (2), les unes au-dessus des autres et en alternance.

5. Collier de serrage selon l'une des revendications 1 à 4, caractérisé en ce que l'agencement et la configuration des rainures (9) avec élargissement (10) et des nervures (7) avec épaississement (8) sont réalisés de telle sorte que leur dimension en section transversale diminue depuis la surface de base de la partie de socle (2) jusqu'à la surface du socle qui porte la partie de serrage.

6. Collier de serrage selon l'une des revendications 1 à 5, caractérisé en ce que les nervures (7) avec épaississement (8) et les rainures (9) avec élargissement (10) présentent une section transversale en forme de tête de champignon.

7. Collier de serrage selon l'une des revendications 1 à 5, caractérisé en ce que les épaississements (8) des nervures (7) et les élargissements (10) des rainures (9) présentent une section transversale configurée en arc de cercle.

8. Collier de serrage selon l'une des revendications 1 à 7, caractérisé en ce que les nervures (7) avec épaississement (8) sont disposées de telle sorte qu'entre des nervures (7) avec épaississement (8) voisines, des rainures (9) avec élargissement (10) correspondantes sont formées par les flancs mutuellement opposés des nervures et les flancs mutuellement opposés des épaississements.

9. Collier de serrage selon l'une des revendications 1 à 8, caractérisé en ce que les nervures (7) avec épaississement (8) et les rainures (9) avec élargissement (10) voisines les unes des autres sont configurées de telle sorte que, lorsque l'on amène transversalement un autre collier de serrage (1), les rainures (9) avec élargissement (10) dont les dimensions en section transversale sont les plus grandes peuvent d'abord être pénétrées partiellement avant que l'épaississement (8) de plus petite section transversale ne s'insère dans la rainure (9) correspondante.
